# EUROPEAN PATENT APPLICATION

(11) **EP 3 503 474 A1**
(43) Date of publication of application: **26.06.2019**
(21) Application number: 17306863.6
(22) Date of filing: 21.12.2017
(51) Int. Cl.: H04L 12/28, H04L 29/08, H04L 12/713, H04L 29/14

(54) **A METHOD FOR REMOTELY PERFORMING A NETWORK FUNCTION ON DATA EXCHANGED WITH AT LEAST ONE GATEWAY**

(71) Applicant: THOMSON LICENSING, 92130 Issy les Moulineaux (FR)
(72) Inventor: BICHOT, Guillaume, 35576 CESSON-SÉVIGNÉ (FR); GOUACHE, Stéphane, 35576 CESSON-SÉVIGNÉ (FR); LE SCOUARNEC, Nicolas, 35576 CESSON-SÉVIGNÉ (FR)
(74) Representative: Vidon Brevets & Stratégie

(57) **Abstract**

In order to reduce the cost of the gateways as well as to ease the management and administration of the gateways, the execution of the network functions is deported in commodity servers under physical and logical control of the ISPs. In the vCPE model, the traffic transmitted from/intended to a gateway goes through a middlebox server or network device performing, among other functions, a NAT function and a firewall function on the data packets continuing the traffic transmitted from/intended to the gateway. For reliability, each master middlebox server is seconded by a slave middlebox server which replicates traffic handled by the master middlebox server. Such a solution is costly and not sustainable. The invention provides a method for remotely performing a network function by a processing unit associated to one processor core of a multicore processor embedded in a network device.

## Description

### TECHNICAL FIELD

The present invention relates to virtual Customer Premise Equipments or vCPE and more particularly to a solution that meets the requirements of resiliency and of cost-effectiveness of the Internet Service Providers (ISPs).

### BACKGROUND

A gateway is a device interconnecting two distinct communication networks such as a local area network (LAN) and a broadband network such as an access network of an ISP. In such an example where a gateway interconnects a LAN to an access network, the gateway is located in the premise of an end-user while being managed by the ISP.

A gateway hosts many functions such as Network address translation (NAT) function and firewall function, also called network functions. Most of the processing power a gateway remains devoted to providing access to the broadband network.

In order to reduce the cost of the gateways as well as to ease the management and administration of the gateways, the execution of the network functions is deported in commodity servers under physical and logical control of the ISPs. This corresponds to the vCPE model where the network functions are no longer executed by the gateways but are moved in the cloud where there are mutualized between a large number of gateways.

In the vCPE model, the traffic transmitted from/intended to a gateway goes through a middlebox server or network device performing, among other functions, a NAT function and a firewall function on the data packets continuing the traffic transmitted from/intended to the gateway. The middlebox servers are powerful devices fit for handling a large number of gateways. The number of middlebox servers necessary for handling the whole traffic of an ISP is determined by mapping subset of gateways to a dedicated middlebox server so that all the traffic transmitted from/intended to the gateways of a given subset is handled by the corresponding middlebox server which in this case is called master middlebox server.

For reliability, each master middlebox server is seconded by a slave middlebox server which replicates traffic handled by the master middlebox server. This means that an ISP needs 2N middlebox servers, where N is the number of master middlebox servers, to handle failures of the master middlebox servers. Such a solution is costly and not sustainable.

There is a need for a vCPE model which is resilient and enables the reduction of the amount of resources dedicated to remotely execute the network functions for a large number of gateways.

The present invention has been devised with the foregoing in mind.

### SUMMARY OF INVENTION

According to a first aspect of the invention there is provided a method for remotely performing a network function on data transmitted to/from at least one gateway, the method being executed by a processing unit associated to one processor core of a multicore processor embedded in a network device, said processing unit being connected to a communication interface of said network device, said method comprising the following steps of:
- Performing the network function on said data transmitted to/from said at least one gateway received on said communication interface of said at least one network device;
- Transmitting the processed data to/from said at least one gateway through said communication interface.

The method according to an embodiment of the invention provides a system capable of supporting a large number of gateways using a limited number of network devices. Such an implementation proves to be efficient, reliable and has a low cost since the number of devices required to implement the solution is limited.

Thus, the solution according to an embodiment of the invention provides high availability of the network functions based on N+1 redundancy, i.e. the ISP over provisions by one network device to tolerate a single failure and not by N network devices as it is the case in existing solutions using the classical 1:1 master/slave architecture. Such a solution allows the use of a dense network devices infrastructure thanks to an optimized usage of physical resources which contribute to minimizing the operational expenditure of the ISP.

Our solution enables gateways to be dynamically mapped to a given remote network device, for example a server, executing network functions such as NAT or Firewall functions. The number of network devices used to handle the data traffic of the gateways of an ISP is adapted to the traffic load, this way, unused servers may be shut down or re-affected to other tasks in order to lower energy consumption.

In order to further reduce the operational expenditure, the method according to an embodiment of the invention may be implemented on standardized network devices such as Common Of The Shelve (COTS) machines composing a virtual network infrastructures (VNI).

The network devices according to an embodiment of the invention correspond to the middlebox servers of the prior art.

According to an embodiment of the invention, the data transmitted to/from a given gateway is assigned to the same communication interface of said at least one network device and is handled by the processing unit connected to said communication interface.

This embodiment of the method according to the invention corresponds to a share-nothing implementation. Such an implementation improves the processor efficiency as well as simplicity since share-nothing implementation limits the coupling between the processing units resulting in complex synchronization and performance issues related to contention.

In a share-nothing implementation according to an embodiment of the invention, a processing unit of a multicore processor of a network device is connected to only one communication interface and a given gateway is associated to one same communication interface of and its associated processing unit of a given network device. The gateways are independent, therefore there is no need for synchronization between the processing units.

According to an embodiment of the invention, when the processing unit connected to said communication interface is unavailable, the data transmitted to/from said gateway is assigned to another processing unit connected to a communication interface of another network device.

This implementation allows to rebalance the load between the network entities with minimal reconfiguration ensuring that many gateways are unaffected by the reconfiguration of the network devices.

According to an embodiment of the invention, at least one set of gateways comprising at least one gateway, called a shard, is associated to:
- at least a processing unit acting as a master processing unit connected to a communication interface of a first network device acting as a master network device, and
- at least a processing unit acting as a slave processing unit connected to a communication interface of a second network device acting as a slave network device.

A shard is mapped to a master processing unit and thus to a master network device and to a slave processing unit and thus a slave processing device. A processing unit can act as both a master and slaves for a plurality of shards as well as a single network device may act as both a master and a slave for a plurality of shards. Consequently, whenever a processing unit fails or a network device fails or is shut down, the load associated with the corresponding processing unit(s) gets spread to a plurality of other processing units attached to other network devices.

To minimize the amount of replication traffic, a sharding policy used in an embodiment of the invention is based on consistent hashing so that the arrival/departure of a network device does not completely changes the mapping between shards and processing units / network devices contrary to other types of sharing such as a round-robin method which would completely change the allocation of the shards to the processing units / network devices.

More particularly, each gateway is assigned randomly to a shard. For example, a shard may comprise a thousand of gateways. Each processing unit of a network device is assigned several shards as a function of its processing capacity. Having more shards than the total number of processing units, and assigning multiple shards to each processing unit of a network device, allows to rebalance the load between the network entities with minimal reconfiguration ensuring that many gateways are unaffected by the reconfiguration of the network devices. This property of not having to move all the gateways is important since the network functions performed by the processing units of the network devices are statefull functions, and applying a completely new mapping as a network device leaves or arrives may lead to a lot of synchronization traffic.

In a usual master/slave setting, a complete network device is set up as a master and a spare network device with identical resources is completely set up as a slave and remain passive which proves to be costly. Relying on a sharding policy combined with a N+1 redundancy scheme enables to reduce the cost. Indeed, since each network device supports several shards and acts as a slave for some of them upon failure of a processing unit (or the network device), the shard(s) (traffic/load) handled by this (these) corresponding processing unit(s) acting as a master, are handled by their respective slave processing unit / network device with each slave processing unit taking only a fraction of the traffic/load associated with the shards. The load of the failing processing units is spread on several other processing units network device(s).

According to an embodiment of the invention, a shard being associated with a given position on a circle, the first network device is the network device associated to at least one position on the circle preceding the position of said shard, and the second network device is the network device associated to a position on the circle preceding the position of the first network device.

Each shard is mapped onto a single position on a circle. Each processing unit of each network device picks several positions on the circle. A shard has as a master processing unit the closest preceding processing unit on the circle, and as a slave processing unit the next closest preceding processing unit that is attached to a physical device different than the physical device attached to the master processing unit on the circle.

Whenever a new network device is introduced in the system of an ISP, its processing units pick a position on the circle and some shards are remapped to these processing units and it alters the former master/slave relationship for a given shard.

One constraint is that for each shard, the master processing unit and the slave processing unit belong to two distinct network devices. This is achieved by choosing the slave processing unit as the second closest processing unit belonging to another network device preceding the shard on the circle.

According to an embodiment of the invention, a mapping between a shard and its master network device and its slave network device is stored in a directory.

Contrary to consistent hashing, such a method allows to precisely control which shard is mapped to which processing unit/network device and this helps in achieving a good load balancing between network devices. In this implementation, a controller unit is tasked with examining the load of each processing unit and moving shards from overloaded processing units to other processing units.

According to an embodiment of the invention, a destination address given to a gateway for the transmission of data from said gateway is an address associated to the shard to which said gateway belongs.

Since a shard may be handled by different network devices depending on the circumstances, the destination address of data transmitted from a gateway is an address of the shard. This ensures that data transmitted from the gateway are handled by a processing unit and that hosted network functions are performed on these data.

Another object of the invention concerns a network device capable of performing a network function on data transmitted to/from at least one gateway, said network device comprising at least one communication interface being connected to one processing units associated with a core processor of a multicore processor embedded in said network device, said core processor being configured to:
- Receive, on a communication interface of said at least one network device, data transmitted to/from said at least one gateway, said network device selected among a plurality of network devices as a function of a load of said network devices,
- Perform the network function on said data transmitted to/from said at least one gateway,

Transmit said processed data to/from aid at least one gateway through said communication interface.

According to an embodiment of the invention, the data transmitted to/from a given gateway is assigned to the same communication interface of said at least one network device and is handled by the processing unit connected to said communication interface.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** illustrates an exemplary system according to an embodiment of the present invention;
**Figure 2****,** a network device 10_{P} according to an embodiment of the invention;
**Figure 3** is a flowchart representing the steps of a method for remotely performing a network function on data transmitted to/from at least one gateway according to an embodiment of the invention;
**Figure 4** represents a method for mapping a shard with a processing unit according to an embodiment of the invention;
**Figure 5** is a workflow representing a workflow of the method according to an embodiment of the invention.

### DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

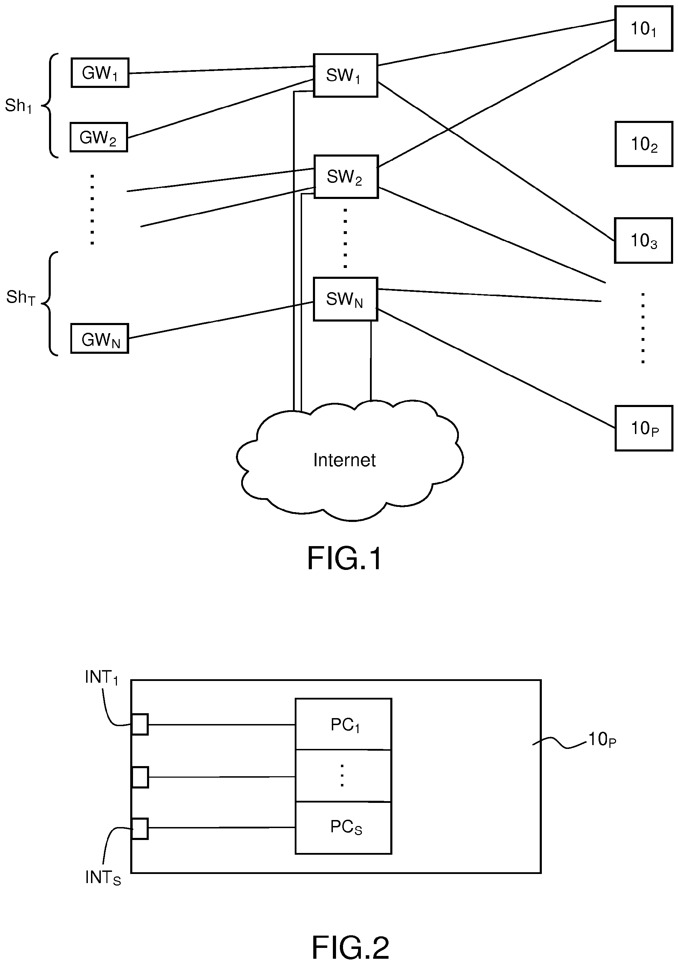

**Figure 1** illustrates an exemplary system 100 according to an embodiment of the present invention.

The system 100 comprises a plurality of gateways GW_{N}, where N ∈ {1,...,N}, a plurality of switches SW_{M}, where M ∈ {1,...,M} and M<N, and a plurality of network devices 10_{P}, where P∈ {1,...,N}, and M<P<N.

The switches SW_{M} may be hardware switches or logical switches. The network devices 10p are standardized network devices such as Common Of The Shelve (COTS) machines composing a virtual network infrastructures (VNI). As represented on **figure 2****,** a network device 10_{P} according to an embodiment of the invention. A network device 10_{P} comprises a multicore processor MCP comprising a plurality of processor cores PCs, where S ∈ {1,...,S}, and S<N. Each processor core PCs hosts a processing unit that is connected to at least one communication interface INTs of the network device 10_{P}. Each processing unit PUs only handles the data traffic received through the communication interface INTs to which it is connected. The communication interfaces INTs of the network device 10_{P} transmit data traffic to/from the gateways GW_{N}.

Each switch SW_{M} handles data traffic transmitted to/from the gateways GW_{N}, as well as data traffic exchanged between different processing units PUs. A switch SW_{M} is logically connected to at least a set of gateways GW_{N} called a shard SH_{T}, where T ∈ {1,...,T}, and T«N, and physically or directly to the plurality of communication interfaces INTs of the network devices 10_{P}. Switches SW_{M} are also logically connected to at least a broadband network such as the Internet. In order to separate data traffic to/from the gateways, or between different processing units PUs, each "type" of data traffic is associated to a VLAN (Virtual Local Area Network). Thus data traffic from the gateways GW_{N} is associated to a first VLAN, data traffic to the gateways GW_{N} is associated to a second VLAN, etc. Each VLAN is associated with its own Virtual Routing Function which relies on a routing table to route the data traffic.

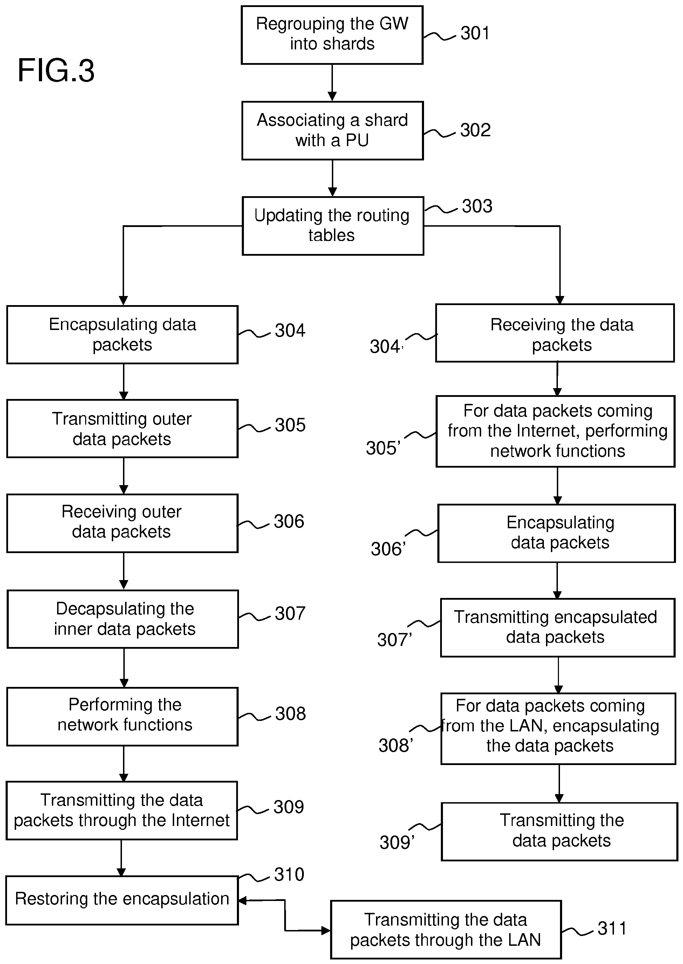

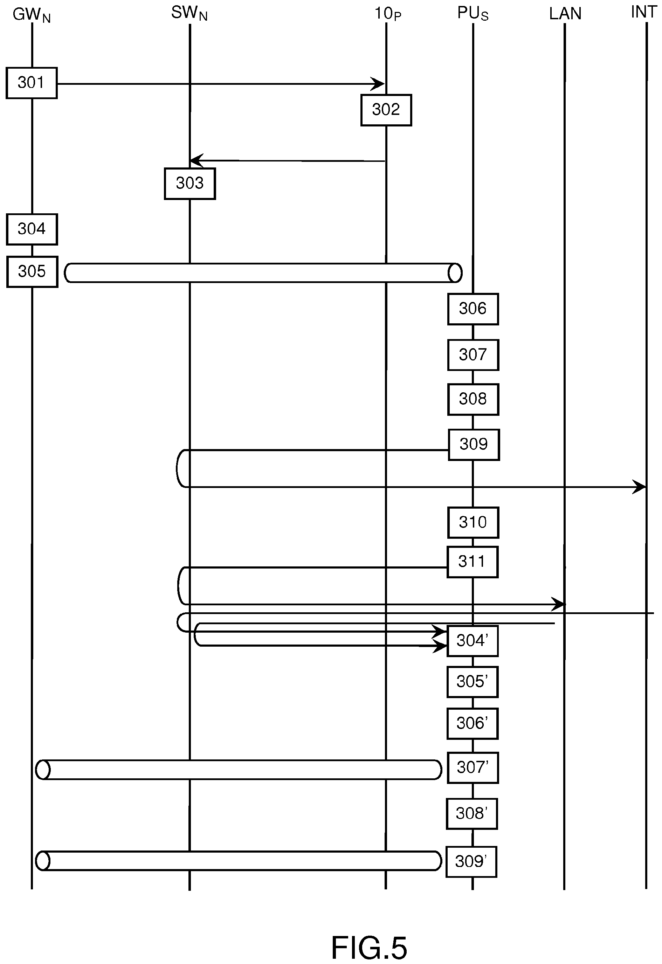

**Figure 3** is a flowchart representing the steps of a method for remotely performing a network function on data transmitted to/from at least one gateway according to an embodiment of the invention. In other words, the method according to an embodiment of the invention applies to upstream traffic, i.e. data traffic sent by the gateways GW_{N} to the Internet or to other devices located in a same access network as the gateways; and to downstream traffic, i.e. data traffic coming from the Internet or other devices located in a same access network as the gateways and intended for the gateways GW_{N}. **Figure 5** is a workflow representing a workflow of the method according to an embodiment of the invention.

In a step 301, the gateways GW_{N} are regrouped into a plurality of shards SH_{T}. Each shard SH_{T} may comprise thousands of gateways.

In a step 302, each shard SH_{T} is associated with a first processing unit PUs embedded in a first network device 10_{P} and a second processing unit PU_{S} embedded in a second network device 10_{P}. The first processing unit PUs acts as a master processing unit PUs and performs network functions on the data traffic to and from gateways belonging to the shard SH_{T} it is associated with. The second processing unit PUs acts as a slave processing unit PUs and performs network functions on the data traffic to and from gateways belonging to the shard SH_{T} it is associated with when the first processing unit PUs is unavailable. A same processing unit PUs can act as a master processing unit PUs for a first shard SH_{T} and as a slave processing unit PUs for a second shard SH_{T}.

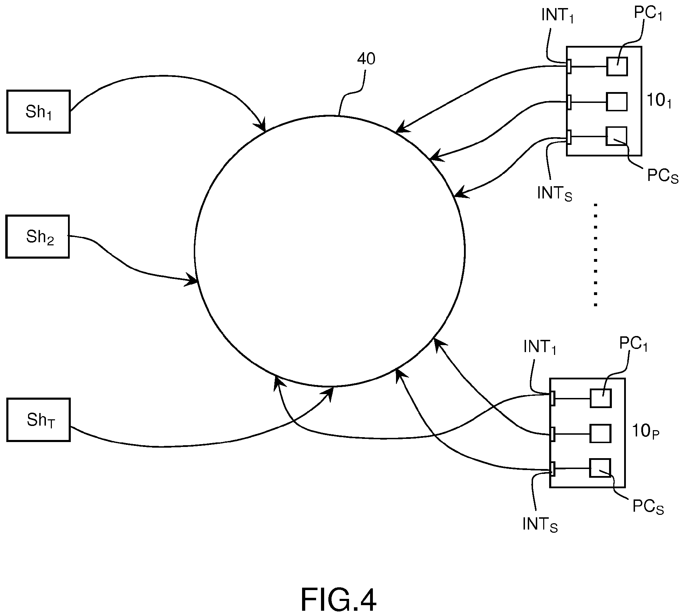

In a first embodiment of the invention, the association between the shards SH_{T} and the processor cores PCS relies on a consistent hashing technique as disclosed on the webpage http://dl.acm.org/citation.cfm?id=258660. As represented on **figure 4****,** each shard SH_{T} is mapped onto a single position on a circle 40. Each processing unit PUs of each network device 10_{P} picks several positions, for example three positions, on the circle 40. A shard SH_{T} is associated with the closest preceding processing unit PUs on the circle 40 as a master processing unit PUs. The shard SH_{T} is then associated with the next closest preceding processing unit PUs on circle 40 that is embedded in a network device 10_{P} different than the network device 10_{P} in which the master processor core is embedded as a slave processing unit PUs.

The consistent hashing according to the first embodiment of the invention is executed by the multicore processor MCP of each network device 10_{P}.

Whenever a new network device is introduced in the system of an ISP, its processor cores PCs pick a plurality of positions on the circle 40 and some shards SH_{T} are remapped to these processor cores PCs. This new mapping alters the former master/slave relationship for a given shard SH_{T}.

In second embodiment of the invention, the association between the shards SH_{T} and the processor cores PCs is stored in a directory. This directory may be stored in a dedicated device.

Contrary to consistent hashing, such a method allows to precisely control which shard SH_{T} is mapped to which processing unit PUs.

In a step 303, the routing tables of the switches SW_{M} are updated with the result of the hashing performed during step 302.

In an embodiment of the invention where consistent hashing is performed, the processor cores PCₛ of each network devices 10_{P} advertise the shards with which they are associated to the switches SW_{M}.

In an embodiment of the invention where the association between the shards SH_{T} and the processor cores PCs is stored in a directory, a control entity configures the routing tables of the switches SW_{M}.

In order to route data packets to and from the gateways GW_{N}, data packets are encapsulated, for example using Generic Routing Encapsulation (GRE) protocol. The outer data packets are then routed between the gateways GW_{N} and their associated processing unit PUs. Thus, each gateway GW_{N} is assigned an IP address and given an IP address associated to the shard SH_{T} to which the gateway GW_{N} belongs.

For a data packet transmitted from a gateway GW_{N}, the source address of the outer data packet is the IP address of the gateway GW_{N} and the destination address of the outer data packet is the IP address associated to the shard SH_{T} to which the gateway GW_{N} belongs.

For a data packet transmitted to a gateway GW_{N}, the source address of the outer data packet is the IP address associated to the shard SH_{T} to which the gateway GW_{N} belongs and the destination address of the outer data packet is the IP address of the gateway GW_{N}.

Updating the routing tables of the switches SW_{M} consists in updating the mapping between the IP address associated to the shard SH_{T} to which the gateway GW_{N} belongs and the processing unit PUs associated with said shard during step 302.

Steps 304 to 311 describe how the upstream data traffic is handled by the different equipments of the system 100.

In step 304, a processor embedded in gateway GW_{N} encapsulates inner data packets in outer data packets for example using GRE protocol. The source address of the encapsulated data packets or outer data packets is the IP address of the gateway GW_{N} and the destination address is the IP address of associated to the shard SH_{T} to which the gateway GW_{N} belongs.

In a step 305, the gateway GW_{N} transmits the outer data packets to the destination address. The outer data packets are routed by the switches SW_{M} according to routing information stored in their routing tables or according to the routing information stored in the routing tables associated with the Virtual Routing Function of the VLAN corresponding to data traffic transmitted from the gateway GW_{N}

In a step 306, the processing unit PUs associated with the shard SH_{T} whose IP address is the destination address of the outer data packets receives said outer data packets through the communication interface INTs to which it is connected.

In a step 307, the processing unit PUs decapsulate the inner data packet. The processing unit PUs saves the association between an IP source address of the inner packet, an IP source address of the outer packet which corresponds to the IP address of the gateway GW_{N} or an IP address of a device connected to the gateway and the destination address of the outer packet which is the IP address of the shard SH_{T}. Based on the destination address of the inner data packet, the processing unit PUs determines if the destination of the data packet is the Internet or a local network.

If the destination of the inner data packet is the Internet, then processing unit PUs performs network functions such as NAT and firewall on the inner data packet in a step 308. A mapping between the source address of the inner data packet, the shard IP address and a public IP address and a port number associated to the processing unit PUs is stored in a memory.

Then in a step 309, the data packet is sent to the Internet through the associated VLAN. The data packets are transmitted through the communication interface INTs to which it is connected and through the switches SW_{M} which route them toward their destination based on the destination address embedded in the header of the data packets and on the routing table associated with the corresponding VLAN. The source address of these data packets is the public IP address of the processing unit PUs.

If the destination of the inner data packet is a local area network LAN, then processing unit PUs restores the encapsulation of the inner data packet while updating the destination address of the outer data packet with the destination address embedded in the header of the inner data packet in a step 310.

Then in a step 311 the outer data packet is sent to the LAN through an associated VLAN. Thus, the outer data packets are transmitted through the communication interface INTs to which it is connected and through the switches SW_{M} which route them toward their destination based on the destination address embedded in the header of the inner data packets and on the routing table associated with the corresponding VLAN.

Steps 304' to 309' describe how the downstream data traffic is handled by the different equipments of the system 100.

In a step 304', the processing unit PUs receives data packets either from the Internet or a LAN through the communication interface INTs to which it is connected.

The data packets coming from the Internet are transmitted from a switch SW_{M} through the VLAN corresponding to data traffic form the Internet to the right processing unit PUs according to the routing table associated with the Virtual Routing Function.

In a step 305', when the processing unit PUs determines the data packet is from the Internet, it performs network functions in order to recover the IP address of the device to which the packet is to be transmitted based on the public IP address and the port number as well as the IP address of the device stored during step 308.

In a step 306', the processing unit PUs encapsulates the data packet based on the IP addresses stored during step 307. The source address of the outer data packet is the IP address of the shard SH_{T} associated with the gateway GWs to which the device is connected to, and the destination address is the IP address of the gateway.

In a step 307', the outer data packets are transmitted to the destination address through the communication interface INTs to which the processing unit PUs is connected. The outer data packets are routed by the switches SW_{M} according to routing information stored in their routing tables.

In a step 308', when the processing unit PUs determines the data packet is from the LAN, the processing unit PUs encapsulates the data packet. The source address of the outer data packet is the IP address of the shard SH_{T} associated with the gateway GWs to which the device is connected to, and the destination address is the IP address of the gateway.

In a step 309', the outer data packets are transmitted to the destination address through the VLAN associated with LAN data traffic and through the communication interface INTs to which the processing unit PUs is connected. The outer data packets are routed by the switches SW_{M} according to routing information stored in the outing table associated with the VLAN traffic corresponding Virtual Routing Function.

When a master processing unit PUs associated to a shard SH_{T} fails or is turned of due to low data traffic, then data traffic of the concerned shard SH_{T} is handled by the slave processing unit PUs. The routing tables of the switches SW_{M} are updated to take into account the unavailability of the master processing unit PUs.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A method for remotely performing a network function on data transmitted to/from at least one gateway, the method being executed by a processing unit associated to one processor core of a multicore processor embedded in a network device, said processing unit being connected to a communication interface of said network device, said method comprising the following steps of:
- Performing the network function on said data transmitted to/from said at least one gateway received on said communication interface of said at least one network device;
- Transmitting the processed data to/from said at least one gateway through said communication interface.

2. The method according to claim 1 wherein the data transmitted to/from a given gateway is assigned to the same communication interface of said at least one network device and is handled by the processing unit connected to said communication interface.

3. The method according to claim 2 wherein when the processing unit connected to said communication interface is unavailable, the data transmitted to/from said gateway is assigned to the other communication interface of another network device and is handled by a processing unit connected to said other communication interface.

4. The method according to claim 1 to 3 wherein at least one set of gateways comprising at least one gateway, called a shard, is associated with:
- at least a first processing unit acting as a master processing unit connected to a communication interface of a first network device acting as a master network device, and
- at least a second processing unit acting as a slave processing unit connected to a communication interface of a second network device acting as a slave network device.

5. The method according to claim 4 wherein a shard being associated a given position on a circle, the first processing unit is the processing unit associated to a position on the circle preceding the position of said shard, and the second processing unit is the processing unit associated to a position on the circle preceding the position of the first processing unit.

6. The method according to claim 4 wherein a mapping between a shard and its master processing unit and its slave processing unit is stored in a directory.

7. The method according to claim 4 wherein a destination address given to a gateway for the transmission of data from said gateway is an address associated to the shard to which said gateway belongs.

8. A network device capable of performing a network function on data transmitted to/from at least one gateway, said network device comprising at least one communication interface being connected to one processing unit of a multicore processor comprising a plurality of processing units embedded in said network device, said processing unit being configured to:
- Receive, on a communication interface of said at least one network device, data transmitted to/from said at least one gateway, said network device selected among a plurality of network devices as a function of a load of said network devices,
- Perform the network function on said data transmitted to/from said at least one gateway,
- Transmit said processed data to/from aid at least one gateway through said communication interface.

9. The device according to claim 8 wherein the data transmitted to/from a given gateway is assigned to the same communication interface of said at least one network device and is handled by the processing unit connected to said communication interface.

10. A computer program **characterized in that** it comprises program code instructions for the implementation of the method according to claim 1 when the program is executed by a processor.

11. A processor readable medium having stored therein instructions for causing a processor to perform the method according to claim 1.

12. Non-transitory storage medium carrying instructions of program code for executing the method according to claim 1, when said program is executed on a computing device.
